# EUROPEAN PATENT APPLICATION

(11) **EP 1 944 216 A1**
(43) Date of publication of application: **16.07.2008**
(21) Application number: 08150248.6
(22) Date of filing: 14.01.2008
(51) Int. Cl.: B62D 3/02

(54) **Mechanical steering assembly**

(30) Priority: 15.01.2007 IT BO20070015
(71) Applicant: Campetella Robotic Center S.r.l., Montecassiano (IT)
(72) Inventor: Campetella, Carlo, 62010 Montecassiano (IT)
(74) Representative: Jorio, Paolo

(57) **Abstract**

A wheel hub (2) of a vehicle is positioned in relation to a relative axis of rotation (3) by means of an actuating device (8, 11) which is linked mechanically to a steering shaft (4) by means of a coupling arrangement (15) defined by at least a tappet (21, 22) which engages a cam (16, 17).

## Description

The present invention relates to a mechanical steering assembly.

In particular, the present invention relates to a mechanical steering assembly of the type comprising a steering shaft, which is mounted so as to rotate about a fixed longitudinal axis thereof, has an upper extremity to which a steering wheel of a vehicle is connected, and also has a lower extremity to which a support plate is fitted in an angularly fixed manner.

Two steering tie rods are normally connected to the support plate and to respective wheel hubs of the vehicle. Said tie rods are movable under the thrust of the steering shaft to position said wheel hubs about further respective longitudinal axes.

When the vehicle travels along a rectilinear path, the mechanical steering assemblies of the known type described above have some drawbacks, mainly deriving from the fact that the force generated on the steering tie rods when the wheels of the vehicle collide with any obstacles along their path (for example stones or holes) generates a relatively high twisting moment on the steering shaft and can cause the steering wheel to suddenly, dangerously and undesirably rotate about said longitudinal axis.

It is an object of the present invention to provide a mechanical steering assembly that overcomes the drawbacks described above and that is simple and cheap to produce.

According to the present invention there is provided a mechanical steering assembly as claimed in the appended claims.

The present invention will now be described with reference to the attached drawings, illustrating a nonlimiting embodiment thereof, in which:
figure 1 is a schematic perspective view, with parts removed for the sake of clarity, of a preferred embodiment of the steering assembly according to the present invention;
figure 2 is a perspective view of a detail of the steering assembly in figure 1; and
figure 3 is a perspective view of a detail of figure 2.

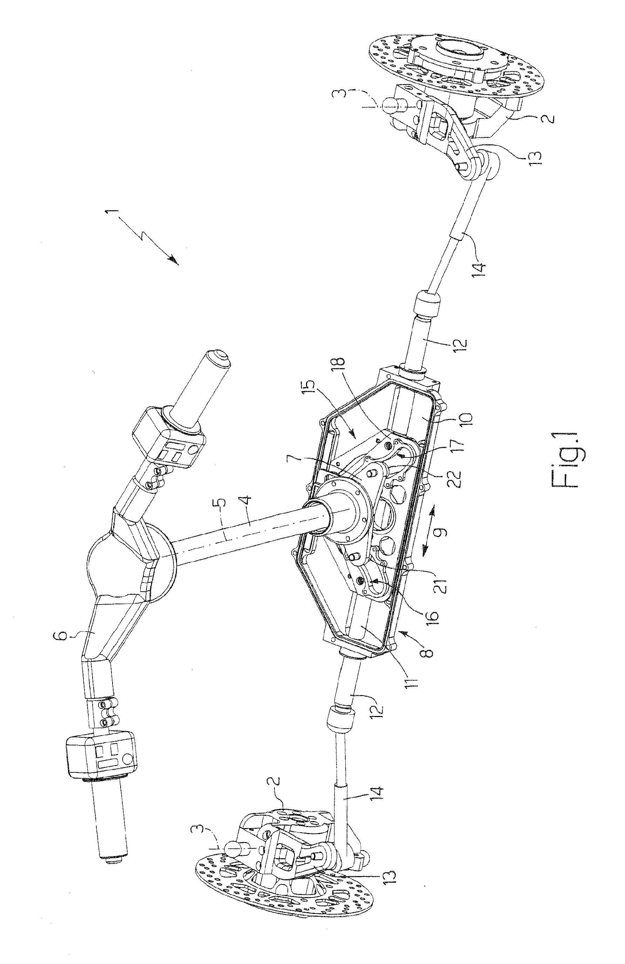

With reference to figure 1, number 1 indicates an overall mechanical steering assembly suited, in this case, to position two wheel hubs 2 of a vehicle (not illustrated), for example a quadricycle, about respective axes 3 of rotation.

The steering assembly 1 comprises a steering shaft 4, which is mounted so as to rotate about a fixed longitudinal axis 5 thereof, has an upper extremity to which a steering wheel 6 is connected and also has a lower extremity fitted in an angularly fixed manner to a plate 7, which is substantially flat and substantially triangular in shape, extends round the shaft 4 and is housed inside a steering box 8.

The box 8 is connected in a known way to a body (not illustrated) of the vehicle (not illustrated) so as to translate, in relation to the shaft 4 and in a way described more fully later on in this document, in a direction 9 which is substantially horizontal and transversal to the axis 5, and comprises a cup-shaped container 10 and a cover (not illustrated) to close said container 10.

The steering assembly 1 also comprises a steering rod 11, which extends across the container 10 in the direction 9, is fitted in an angularly and axially fixed manner to the container 10, and has two extremities 12, which project outside the container 10 in the direction 9 and each of which is connected to a bracket 13 of a respective wheel hub 2 by means of a relative intermediate articulated arm 14.

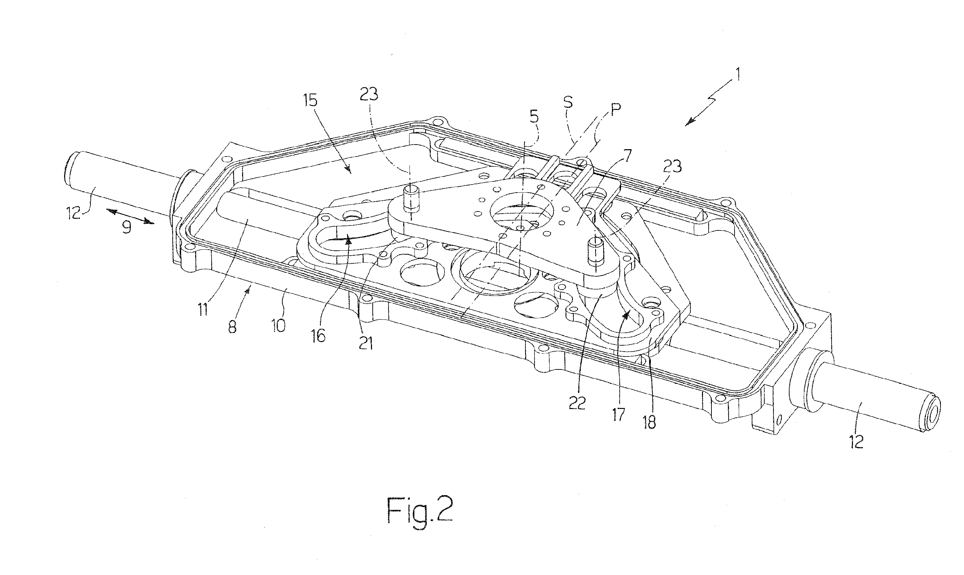

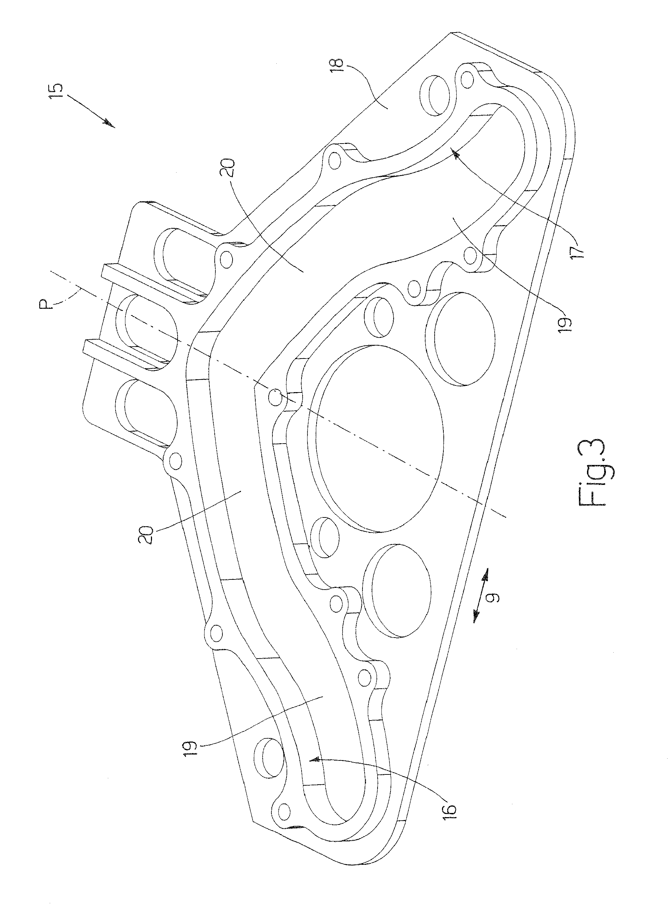

As illustrated in figures 2 and 3, the box 8 and, thus, the rod 11, are linked mechanically to the shaft 4 by means of a coupling arrangement 15 comprising two cams 16, 17, which are provided on the upper surface of a plate 18 fixed centrally to the inside of the container 10, extend from opposing sides of a plane P of symmetry of the plate 18 substantially perpendicular to the direction 9, and are, in the specific case, joined to one another.

Each cam 16, 17 comprises two curved sections 19, 20 having opposing concave surfaces, and is engaged by a relative cam follower 21, 22, which is rotatingly coupled to the plate 7, and has a longitudinal axis 23 that is substantially parallel to the axis 5.

The axes 23 are arranged at equal distances from the axis 5, they are aligned in relation to one another, define, together with the axis 5, the vertices of an isosceles triangle, and are arranged on opposite sides of a plane S of symmetry of the plate 7, the position of which depends on the position of the shaft 4 about said axis 5.

In use, when the steering wheel 6 and thus the shaft 4 turn in a clockwise direction about the axis 5, the followers 21, 22 engage the section 20 of the cam 16, and, respectively, the section 19 of the cam 17 pushing the box 8 and, thus, the rod 11 to the left in the direction 9; likewise, when the steering wheel 6 and thus the shaft 4 turn in an anti-clockwise direction about the axis 5, the followers 21, 22 engage the section 19 of the cam 16 and, respectively, the section 20 of the cam 17 pushing the box 8 and, thus, the rod 11 to the right in said direction 9.

With regard to the above description, it should be noted that:

when the planes P and S coincide, that is to say, when the angle of rotation of the shaft 4 is substantially zero, any force exerted on the steering rod 11 parallel to the direction 9 generates a relatively reduced twisting moment on the shaft 4 and, thus, on the steering wheel 6; and
the cams 16, 17 are shaped so as to vary an existing steering ratio between an angle of rotation of the shaft 4 about the axis 5 and a corresponding angle of rotation of the wheel hubs 2 about the relative axes 3 and, in particular, so as to reduce said steering ratio when the angle of rotation of the shaft 4 about the axis 5 increases.

## Claims

1. Mechanical steering assembly for positioning at least a wheel hub (2) of a vehicle in relation to a relative first axis (3) of rotation, said steering assembly comprising a steering shaft (4) mounted so as to rotate about a fixed second longitudinal axis (5) thereof; actuating means (8, 11) to move the wheel hub (2) about said first axis (3); and coupling means (15) to mechanically link the actuating means (8, 11) to the steering shaft (4) so as to move the actuating means (8, 11) in a fixed direction (9) following a movement of the steering shaft (4) about said second axis (5); and **characterized in that** the coupling means (15) comprise at least a cam (16, 17) and at least a tappet (21, 22) engaged in said cam (16, 17).

2. Steering assembly according to claim 1, wherein the coupling means (15) comprise two tappets (21, 22) and, for each tappet (21, 22), a cam (16, 17) engaged by said tappet (21, 22).

3. Steering assembly according to claim 1 or 2, wherein each cam (16, 17) comprises at least two curved sections (19, 20).

4. Steering assembly according to claim 3, wherein said curved sections (19, 20) have opposing concave surfaces.

5. Steering assembly according to any of the claims, wherein the coupling means (15) comprise two tappets (21, 22) having respective third longitudinal axes (23) and, for each tappet (21, 22), a cam (16, 17) engaged by said tappet (21, 22); said third axes (23) being arranged at substantially equal distances from said second axis (5).

6. Steering assembly according to claim 5, wherein said third axes (23) define, together with said second axis (5), the vertices of a triangle.

7. Steering assembly according to claim 5 or 6, wherein said third axes (23) are aligned in relation to one another.

8. Steering assembly according to any of the previous claims, wherein each of said cams (16, 17) is shaped so as to adjust an existing steering ratio between an angle of rotation of the steering shaft (4) about said second axis (5) and a corresponding angle of rotation of the wheel hub (2) about said first axis (3).

9. Quadricycle comprising a mechanical steering assembly according to any of the previous claims.

10. Vehicle comprising a mechanical steering assembly according to any of the previous claims.
